# EUROPEAN PATENT APPLICATION

(11) **EP 1 827 010 A2**
(43) Date of publication of application: **29.08.2007**
(21) Application number: 06018538.6
(22) Date of filing: 05.09.2006
(51) Int. Cl.: H04N 5/44, H04N 5/45

(54) **Method for outputting digital broadcast data in a digital broadcast reception device**

(30) Priority: 22.02.2006 KR 20060017369
(71) Applicant: Samsung Electronics Co., Ltd., Suwon-si, Gyeonggi-Do (KR)
(72) Inventor: Noh, Dong-Hoon, Yeongtong-gu Suwon-si, Gyeonggi-do (KR); Jang, Hwan-Gee, Yeongtong-gu Suwon-si, Gyeonggi-do (KR); Kwon, Dong-Wook, Yeongtong-gu Suwon-si, Gyeonggi-do (KR); Ko, Byung-Yeol, Yeongtong-gu Suwon-si, Gyeonggi-do (KR)
(74) Representative: Lang, Johannes

(57) **Abstract**

Disclosed is a method for outputting digital broadcast data in a digital broadcast reception device, which includes setting at least two preferred channels in each of at least one broadcast reception mode; detecting when a request for outputting broadcast programs of the preferred channels is input by a user during the output of a digital broadcast program currently received in a specific broadcast reception mode, and outputting the current digital broadcast program to a main screen; generating sub-screens in a number corresponding to the number of the broadcast reception mode or modes in which the preferred channels have been set; receiving digital broadcast programs of the preferred channels set in each broadcast reception mode; and outputting the received digital broadcast programs to the corresponding sub-screens. The method enables the user to view digital broadcast programs of preferred channels while viewing a specific digital broadcast program. Without necessarily having to directly press keys to search channels, which enhances the user convenience is enhanced.

## Description

### BACKGROUND OF THE INVENTION

### 1. Field of the Invention

The present invention relates generally to a method for outputting digital broadcast data in a digital broadcast reception device, and in particular, to a method for simultaneously outputting multiple digital broadcast programs in a digital broadcast reception device, which enables a user to simultaneously view a digital broadcast program of a preferred channel while viewing another program of a different channel.

### 2. Description of the Related Art

Digital broadcasting generally refers to high-quality, high-definition audio/video broadcasting services replacing conventional analog services. Digital broadcasting is broadly divided into digital satellite broadcasting and digital terrestrial broadcasting.

Digital satellite broadcasting offers multi-channel multimedia mobile broadcasting services through a handheld digital TV receiver (e.g. a mobile phone or a personal information terminal) or an in-car digital TV receiver, without the limitations of time and space.

Digital terrestrial broadcasting developed from Digital Audio Broadcasting (DAB is a new concept in mobile-reception multimedia broadcasting services using an unused VHF Channel 12. Digital terrestrial broadcasting transmits television, radio and data broadcasts over multiple channels.

Rapid development of digital broadcasting technologies and mobile communication technologies has led to an increasing interest in digital broadcasting services allowing people to view digital broadcasts whether moving or otherwise. Particularly, Digital Multimedia Broadcasting (DMB) services offered through mobile communication terminals are attracting keen interest.

Some of the recently launched digital broadcast reception devices have a dual-screen function for displaying a digital broadcast program of a specific channel on a main screen and another digital broadcast program of a different channel on a sub-screen allowing viewers to simultaneously view the two different broadcast programs.

However, in order to view digital broadcasts of different channels using the dual-screen function, viewers have to press keys and select a channel for receiving desired broadcast data which will be displayed on the sub-screen. Also, the viewers have to repeat channel searches whenever they wish to change the channels.

### SUMMARY OF THE INVENTION

Accordingly, the present invention has been made to solve the above-mentioned problems occurring in the conventional art, and an object of the present invention is to provide a method for simultaneously outputting multiple digital broadcast programs in a digital broadcast reception device, which enables a user to view a digital broadcast program of a preferred channel while viewing another program of a different channel.

In order to accomplish the above aspect of the present invention, there is provided a method for outputting digital broadcast data in a digital broadcast reception device, which includes setting at least two preferred channels in each of at least one broadcast reception mode; detecting when a request for outputting broadcast programs of the preferred channels is input by a user during the output of a digital broadcast program currently received in a specific broadcast reception mode, and outputting the current digital broadcast program to a main screen; generating sub-screens in a number corresponding to the number of the broadcast reception mode or modes in which the preferred channels have been set; receiving digital broadcast programs of the preferred channels set in each broadcast reception mode; and outputting the received digital broadcast programs to the corresponding sub-screens.

In accordance with another aspect of the present invention, there is provided a method for outputting digital broadcast data in a digital broadcast reception device, which includes setting at least two preferred channels for each of one or more broadcast reception modes; storing digital broadcast programs received on the preferred channels in a memory; detecting when a request for outputting the broadcast programs of the preferred channels is input by a user during the output of a digital broadcast program currently received in a specific broadcast reception mode, and outputting the current digital broadcast program to a main screen; generating sub-screens in a number corresponding to the number of the broadcast reception mode or modes in which the preferred channels have been set; and outputting the stored digital broadcast programs to the corresponding sub-screens in the set order of the preferred channels.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating a digital broadcast reception device according to the present invention;
FIG. 2 is a flowchart illustrating the operation of a digital broadcast reception device according to a first embodiment of the present invention;
FIG. 3 is a flowchart illustrating a process of receiving digital broadcast data of preset preferred channels in the digital broadcast reception device in FIG. 2;
FIG. 4 is a flowchart illustrating the operation of a digital broadcast reception device according to a second embodiment of the present invention; and
FIGs. 5A through 5E are views for explaining the operation of a digital broadcast reception device according to the present invention.

### DETAILED DESCRIPTION OF THE PREFERRED EMBODIMENT

Hereinafter, preferred embodiments of the present invention will be described with reference to the accompanying drawings. Descriptions of well-known functions and constructions are omitted for clarity and conciseness. In the following description, the same reference numeral will be used for the same element.

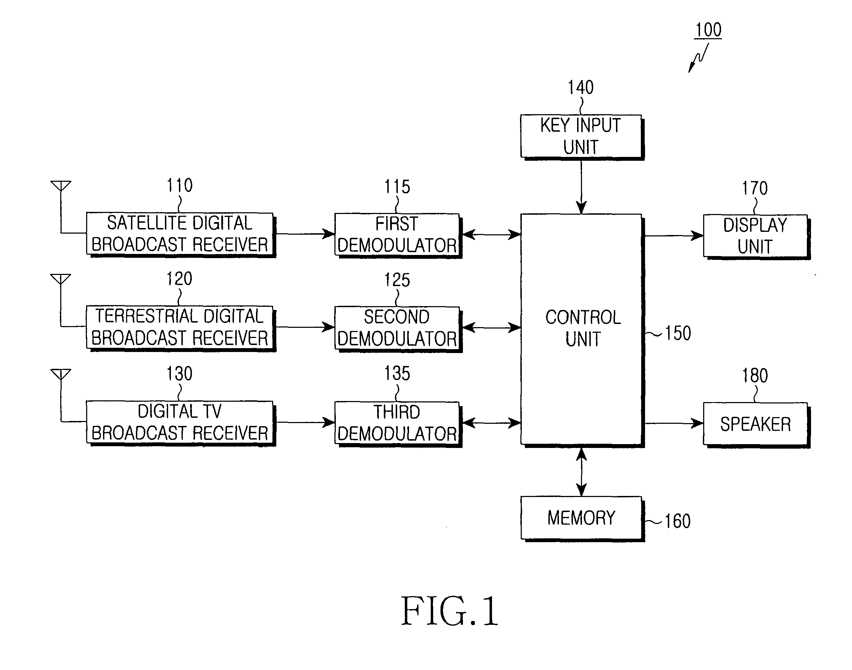

FIG. 1 is a block diagram illustrating a digital broadcast reception device according to the present invention. Referring to FIG. 1, the digital broadcast reception device 100 includes a satellite digital broadcast receiver 110, a first demodulator 115, a terrestrial digital broadcast receiver 120, a second demodulator 125, a digital TV broadcast receiver 130, a third demodulator 135, a key input unit 140, a control unit 150, a memory 160, a display unit 170 and a speaker 180.

Although the present invention as illustrated in FIG. 1 provides three receivers for different broadcast reception modes, the number of receivers included in the digital broadcast reception device 100 is not limited to three. It is possible to provide a single receiver having three antennas for reception of satellite digital broadcast, terrestrial digital broadcast and digital TV broadcast, respectively.

Under the control of the control unit 150, the satellite digital broadcast receiver 110, terrestrial digital broadcast receiver 120 and digital TV broadcast receiver 130 receive digital broadcast data of specific channels and output the received broadcast data to the first demodulator 115, second demodulator 125 and third demodulator 135, respectively. The specific channels refer to the channels of the broadcast reception modes selected by the user.

Each of the first demodulator 115, second demodulator 125 and third demodulator 135 demodulates the input digital broadcast data into a digital data stream and outputs the digital data stream to the control unit 150.

The key input unit 140 transfers an operation signal generated from a key or speech input to the control unit 150. The user can set one of the keys provided on the key input unit 140 as a key for requesting the output of a digital broadcast or a key for requesting the setting of a preferred channel. Alternatively, such request keys can be separately provided on the key input unit 140.

The control unit 150 controls the overall operation of the digital broadcast reception device 100. Particularly, the control unit 150 demultiplexes a digital data stream input from the first to third demodulators 115, 125 and 135 to divide the stream into an audio data stream and a video data stream. The control unit 150 decodes the audio and video data streams and outputs the decoded audio and video data streams to the speaker 180 and the display unit 170 through an audio signal processor (not shown) and a video signal processor (not shown).

The control unit 150 sets at least two preferred channels in each broadcast reception mode in response to the user's request for setting preferred channels. In other words, the user can set at least two preferred channels in each broadcast reception mode.

The user can input a request for outputting broadcast data of the preferred channels while viewing a digital broadcast program output in a specific broadcast reception mode. At this time, the control unit 150 displays the currently output digital broadcast data on a main screen of the display unit 170 using a Picture-In-Picture (PIP) function. In this connection, the control unit 150 can include a separate PIP processor (not shown).

The control unit 150 generates sub-screens in a number corresponding to the number of the broadcast reception mode or modes in which the preferred channels have been predetermined. Then the control unit 150 receives digital broadcast data of the preferred channels in real time and sequentially outputs the received data to the respective sub-screens in the set order of the preferred channels. For example, if the preferred channels have been set in two broadcast reception modes, the control unit 150 will generate two sub-screens in a predetermined location of the display screen. If a time interval (for example, every five seconds) has been set to change the preferred channels of each broadcast reception mode, the control unit 150 will output the received digital broadcast data to each sub-screen, changing the preferred channels at the predetermined time interval.

When one of the preferred channels is selected by the user during the output of the digital broadcast programs of the preferred channels, the control unit 150 will stop changing the channels and outputs only the digital broadcast program of the selected channel.

Prior to receiving the digital broadcast data of the preferred channels through the receivers for corresponding broadcast reception modes, the control unit 150 should preferably check whether information on the preferred channels set by the user is identical to the channel information included in previously stored digital broadcast program guide (or electronic program guide (EPG)) data. In other words, the control unit 150 checks whether there is a change in the information on the preferred channels. If there is no change in the information on the preferred channels, the control unit 150 will receive the corresponding digital broadcast data. On the other hand, if information on any preferred channel has changed, the control unit 150 will not receive the digital broadcast data of that channel. At this time, the control unit 150 can indicate the preferred channel with changed information in a predetermined area of the sub-screen for the corresponding broadcast reception mode while outputting the broadcast programs of the other preferred channels.

When checking whether information on the preferred channels set by the user is identical to the channel information included in the previously stored EPG data, the control unit 150 should preferably confirm whether the EPG data stored in the memory 160 has been updated. If the EPG data has not been updated, it will be updated under the control of the control unit 150. The EPG data can be received and updated when requested by the user. Alternatively, the EPG data can be periodically updated with new data received at periodic intervals (i.e. transmission intervals at which a service provider offers the EPG data) and stored in the memory 160 regardless of the user's request.

Once at least two preferred channels are set for each broadcast reception mode, the control unit 150 will receive digital broadcast data of each preferred channel and store the received data in the memory 160. Preferably, the control unit 150 should receive the digital broadcast data of the preferred channels at predetermined periodic intervals and store the received data in the memory 160.

When a request for outputting broadcast data of the preferred channels is input by the user during the output of digital broadcast data currently received in a specific broadcast reception mode, the control unit 150 can then promptly output the digital broadcast data stored in the memory 160 to the corresponding sub-screens in the set order of the preferred channels, without the need to receive the digital broadcast data of the preferred channels in real time.

In the present invention, the memory 160 stores a variety of information necessary to control the operation of the digital broadcast reception device 100. Also, the memory 160 stores information on the preferred channels set for each broadcast reception mode (for example, names and numbers of the preferred channels). When the digital broadcast programs of the preferred channels are received through at least one of the satellite digital broadcast receiver 110, terrestrial digital broadcast receiver 120 and digital TV broadcast receiver 130 according to the broadcast reception mode, the memory 160 stores each received digital broadcast program.

In addition, the memory 160 receives EPG data including information on digital broadcast programs through each broadcast receiver and stores the received EPG data.

The display unit 170 and the speaker 180 output the digital broadcast data in visual and auditory manners, respectively.

The display unit 170 outputs various display data generated in the digital broadcast reception device 100. The display unit 170 can include a Liquid Crystal Display (LCD) which can support high-resolution digital broadcast data. The LCD can also serve as an input device, when the LCD is a touch screen display.

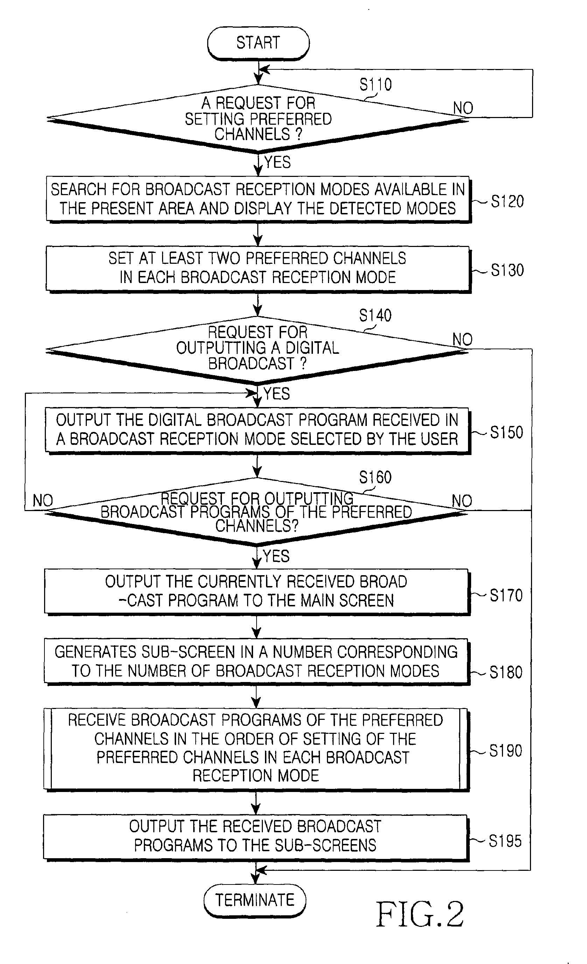

FIG. 2 is a flowchart showing the operation of a digital broadcast reception device according to a first embodiment of the present invention.

Referring to FIGs. 1 and 2, the control unit 150 determines whether a request for setting preferred channels is input by the user in step S 110. The user can input the request using a preferred channel setting menu among digital broadcast related menus in the digital broadcast reception device. If a separate key for setting preferred channels is provided on the key input unit 140, the user can press that key to request the setting of preferred channels.

Upon detecting the request for setting preferred channels, the control unit 150 searches for broadcast reception modes available in the present area and displays the available broadcast reception modes on the display unit 170 in step S120. The broadcast reception modes include a satellite digital broadcast reception mode, a terrestrial digital broadcast reception mode and a digital TV broadcast reception mode.

The control unit 150 sets at least two preferred channels in each of the displayed broadcast reception modes in step S130. Specifically, when the user selects at least one broadcast reception mode in which preferred channels will be predetermined, the control unit 150 will detect channels corresponding to each selected broadcast reception mode from the EPG data and display the detected channels on the display unit 170. Then the user can select preferred ones from the displayed channels by pressing keys. At this time, the control unit 150 should preferably display an option for setting time intervals for switching the preferred channels (i.e. sequentially outputting digital broadcasts of the preferred channels). Simply, the user can set a desired channel-changing time interval together with the preferred channels. The channel-changing time interval can be set to one or more seconds or minutes. Alternatively, the channel-changing time interval can be set by default.

Upon completing the setting of the preferred channels, the control unit 150 checks whether a request for outputting digital broadcast data is input by the user in step S140.

When the request for outputting digital broadcast data is input, the control unit 150 outputs a digital broadcast program of a specific channel, which is received in a broadcast reception mode selected by the user (for example, a satellite digital broadcast reception mode), to the display unit 170 and the speaker 180 in step S150.

The control unit 150 then determines whether the user inputs a request for outputting broadcast data of the preferred channels during the output of the digital broadcast program of the currently selected channel in step S160.

If the request for outputting broadcast data of the preferred channels is input, the control unit 150 will output the digital broadcast program of the currently selected channel to the main screen of the display screen in step S170 and generate sub-screens at a predetermined location of the display screen in a number corresponding to the number of the broadcast reception mode or modes in which the preferred channels have been predetemined in step S180. The control unit 150 divides the full display screen into one main screen and at least one sub-screen using the Picture-In-Picture (PIP) function.

Then the control unit 150 receives digital broadcast programs of the preferred channels in real time in the predetermined order of the preferred channels in each broadcast reception mode (S 190). The setting order refers to a sequential order in which the user sets the preferred channels.

The control unit 150 outputs real-time received digital broadcast programs of the preferred channels to the sub-screens generated according to the corresponding broadcast reception modes in step S195. In step S 195, the control unit 150 can indicate the corresponding broadcast reception mode in a predetermined area of each generated sub-screen. Preferably, the control unit 150 should output the digital broadcast program of each preferred channel to the corresponding sub-screen for a preset period of time and change the preferred channels at the preset time intervals.

When the user selects one preferred channel during the sequential output of the digital broadcast programs of the preferred channels, the control unit 150 then stops changing the channels and outputs the digital broadcast program of the selected channel only.

If digital broadcast data of any preferred channel is not received, the control unit 150 will indicate the preferred channel in a predetermined area of the corresponding sub-screen.

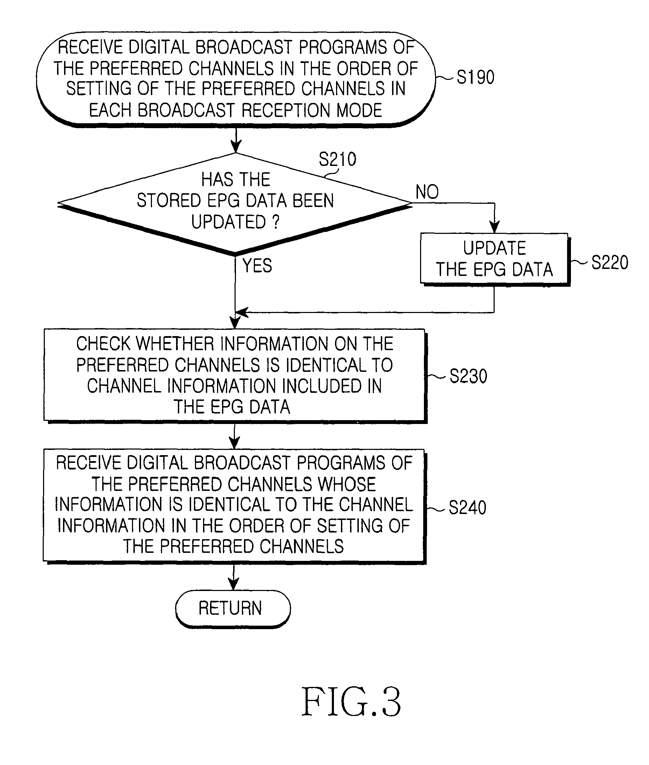

FIG. 3 is a flowchart showing a process of receiving digital broadcast data of preset preferred channels in the digital broadcast reception device in FIG. 2. In other words, FIG. 3 is a detailed illustration of step S 190 in the flowchart of FIG. 2.

Referring to FIGs. 1 and 3, the control unit 150 confirms whether the digital broadcast program guide data (i.e. EPG data) stored in the memory 160 has been updated in step S210.

If the stored EPG data has not been updated, the control unit 150 will first update the EPG data in step S220.

The control unit 150 then confirms whether information on the preferred channels in each of the preset broadcast reception modes is identical to the channel information included in the updated EPG data in step S230. The information on the preferred channels includes channel numbers, channel names, titles of broadcast programs and broadcast program information. The broadcast program information can include the start time, end time, title, main cast, director and TV rating of each program.

In order to confirm whether information on the preferred channels is identical to the channel information included in the EPG data, the control unit 150 should preferably use the Event Information Table (EIT) among various table information constructing the EPG data, such as Network Information Table (NIT), Broadcaster Information Table (BIT) and Service Description Table (SDT).

NIT includes information on satellites and network names. BIT is used for transmitting information on TV stations, which includes notices from TV stations, TV station names and a list of current TV channels. SDT is used for transmitting information on each channel that includes a channel name, consignor broadcaster's name, URL (Uniform Source Locator) of each channel and channel type. EIT illustrates information on each broadcast program that includes a program name, program URL information, program broadcast time and brief explanation of each program.

As stated above, the control unit 150 should preferably use EIT information to confirm whether the information on the preferred channels is identical to the channel information included in the EPG data.

The control unit 150 receives digital broadcast programs of the preferred channels that are identical to the channel information included in the EPG data in the predetermined order of the preferred channels in step S240. Also, the control unit 150 stores digital broadcast programs of the other preferred channels which are not identical to the channel information included in the EPG data in the memory 160. When outputting the digital broadcast programs of the preferred channels that are identical to the channel information in the EPG data, the control unit 150 may indicate the preferred channels that are not identical to the channel information in a predetermined area of the sub-screens.

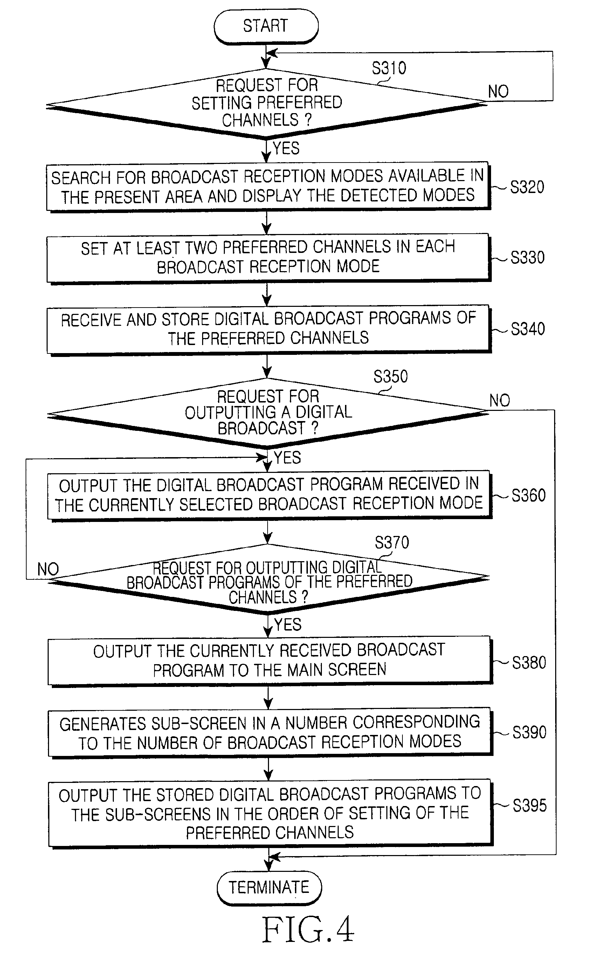

FIG. 4 is a flowchart illustrating the operation of a digital broadcast reception device according to a second embodiment of the present invention.

Referring to FIGs. 1 and 4, the control unit 150 determines whether a request for setting preferred channels is input by the user in step S310.

When the request is input, the control unit 150 checks for broadcast reception modes available in the present area and displays the available broadcast reception modes on the display unit 170 in step S320.

The control unit 150 sets at least two preferred channels in each of the displayed broadcast reception modes in step S330. At this time, the control unit 150 should preferably display an option for setting time intervals for switching the preferred channels (i.e. sequentially outputting digital broadcast programs of the preferred channels) so that the user can set a desired channel-changing time interval together with the preferred channels.

The control unit 150 receives digital broadcast programs of the set preferred channels through the corresponding receivers and stores the received digital broadcast programs in the memory 160 in step S340. Preferably, the control unit 150 should confirm whether information on the preferred channels has been changed through the process of FIG. 3 to avoid receiving a digital broadcast program of any preferred channel whose information has been altered. Preferably, the control unit 150 should indicate the preferred channel whose information has been altered in a predetermined area of the corresponding sub-screen.

The control unit 150 receives the digital broadcast programs of the preferred channels at preset time intervals and stores the received broadcast programs in the memory 160. The user can set time intervals.

The memory 160 includes first and second buffers. A digital broadcast program received first is temporarily stored in the first buffer. When a new digital broadcast program is received at the preset time intervals, the memory 160 moves the digital broadcast program stored in the first buffer to the second buffer and stores the new digital broadcast program in the first buffer.

In step S350, the control unit 150 checks whether a request for outputting a digital broadcast program is input by the user.

In step S360, when the request is input, the control unit 150 outputs the digital broadcast program of a specific channel which is currently received in the broadcast reception mode selected by the user (for example, in the satellite digital broadcast reception mode) to the display unit 170 and the speaker 180.

In step S370, the control unit 150 confirms whether a request for outputting broadcast programs of the preferred channels is input by the user during the output of the currently received digital broadcast program. The user can input the request using a digital broadcast related menu or a separate key provided on the key input unit 140.

If the request for outputting broadcast programs of the preferred channels is input, the control unit 150 will output the currently received broadcast program to the main screen of the display screen in step S380 and generate sub-screens at a predetermined location of the display screen in a number corresponding to the number of the broadcast reception modes in which the preferred channels have been set in step S390.

The control unit 150 outputs the digital broadcast programs stored in the memory 160 to the sub-screens in the set order of the preferred channels in each broadcast reception mode in step S395. If a channel-changing time interval (or a time period during which each broadcast program should be displayed) has been previously set, the control unit 150 will output the digital broadcast program of each preferred channel to the corresponding sub-screen for the preset time period and switch to the next preferred channel to output the digital broadcast program of the next channel for the same time period.

When the user selects one preferred channel during the sequential output of the digital broadcast programs of the preferred channels, the control unit 150 then stops changing the channels and keeps on outputting the digital broadcast program of the selected channel only.

Preferably, the control unit 150 should indicate the corresponding broadcast reception mode in a predetermined area of each sub-screen while outputting the digital broadcast programs of the preferred channels.

FIGs. 5(A) to 5(E) are views for explaining the operation of a digital broadcast reception device according to the present invention.

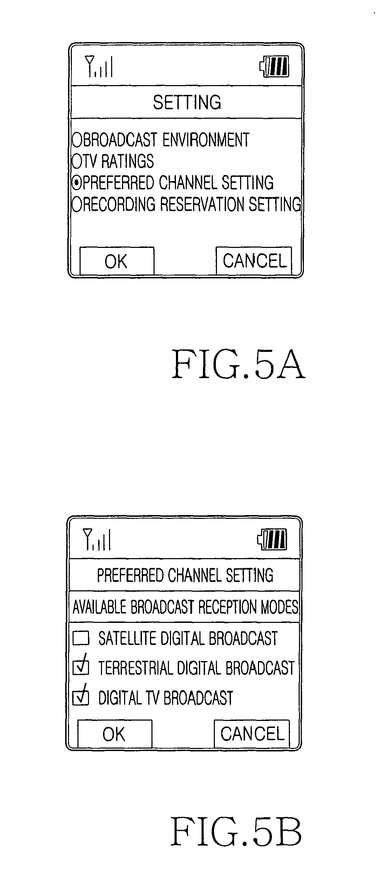

FIGs. 5(A) to 5(C) illustrate menus for setting preferred channels in the digital broadcast reception device according to the present invention. Referring to FIG. 5(A), the digital broadcast reception device provides digital broadcast related menus including a menu for setting preferred channels. When the user selects the menu for setting preferred channels as illustrated in FIG. 5(A), the digital broadcast reception device searches for broadcast reception modes available in the present area and displays a list of the available broadcast reception modes as illustrated in FIG. 5(B). The user can press a key to select at least one broadcast reception mode in which preferred channels will be set.

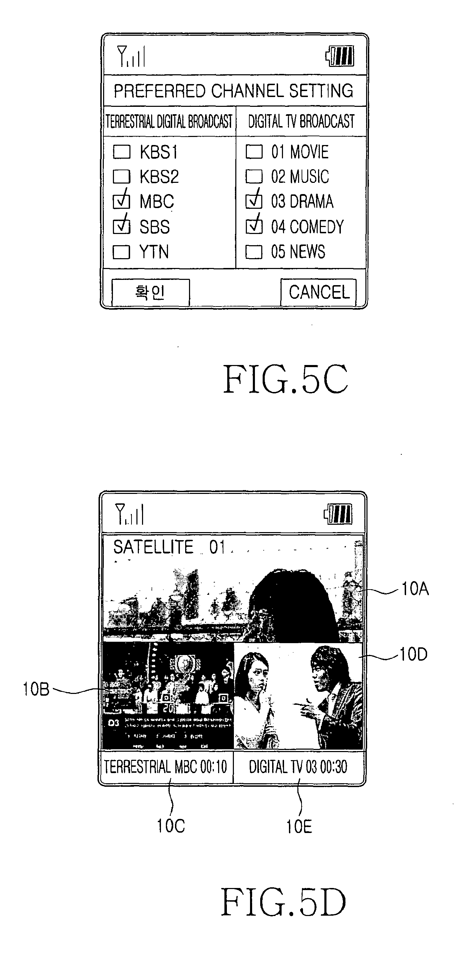

When the user presses an OK key after selecting one or more (for example, two) broadcast reception modes in the menu of FIG. 5(B), the digital broadcast reception device detects all the channels available in the selected broadcast reception modes from the digital broadcast program guide data, i.e. EPG data, and displays a list of the available channels as illustrated in FIG. 5(C).

The user can select desired channels from the displayed list of FIG. 5(C) through key inputs. Then the digital broadcast reception device sets the selected channels as preferred channels.

FIG. 5(C) shows the selection of two channels "MBC" and "SBS" in the terrestrial digital broadcast reception mode and two other channels "03 drama" and "04 comedy" in the digital TV broadcast reception mode. Although not illustrated in FIG. 5(C), the digital broadcast reception device should preferably indicate an ordinal number when each preferred channel is selected, thereby showing the sequential order in which the preferred channels were set. In order to set the preferred channels, the user can input information, such as channel numbers or channel names, in a keyword input manner.

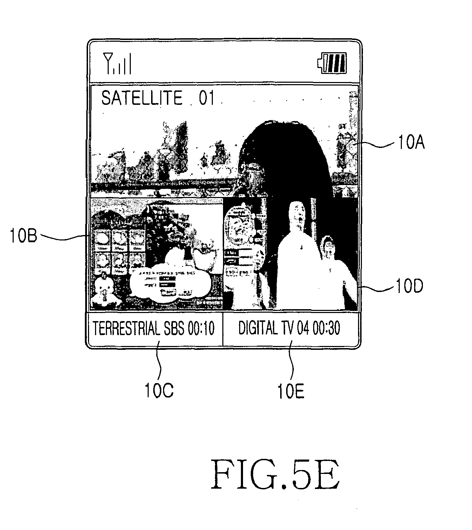

FIGs. 5(D) and 5(E) illustrate the display of a digital broadcast program (e.g., a satellite digital broadcast program) on a main screen and other digital broadcast programs on two sub-screens in the digital broadcast reception device.

Referring to FIG. 5(D), if the user inputs a request for outputting broadcast programs of the preferred channels while viewing a digital broadcast program received through Channel 1 in the satellite digital broadcast reception mode, the digital broadcast reception device will output the current received digital broadcast program of Channel 1 to the main screen 10A and generate two sub-screens 10B and 10D. According to the sequential order of setting of the preferred channels in each broadcast reception mode, the digital broadcast reception device will output a digital broadcast program of "MBC" which was first selected in the terrestrial digital broadcast reception mode to the first sub-screen 10B and a digital broadcast program of "03 drama" channel which was first selected in the digital TV broadcast reception mode to the second sub-screen 10D.

As illustrated in FIG. 5(D), corresponding broadcast reception modes and channel names are indicated in predetermined areas 10C and 10E of the first and second sub-screens 10B and 10D. If a channel-changing time interval (or a time period during which each broadcast program should be displayed; e.g., 10 seconds or 30 seconds) has been set, it will also be indicated in the predetermined areas 10C and 10E.

After outputting the digital broadcast program of the first selected channel in each broadcast reception mode for the preset time period, the digital broadcast reception device outputs a program of the subsequently selected channel in each broadcast reception mode as illustrated in FIG. 5(E).

FIG. 5(E) shows that a digital broadcast program of "SBS" in the terrestrial digital broadcast reception mode is output to the first sub-screen 10B and a digital broadcast program of "04 comedy" channel in the digital TV broadcast reception mode is output to the second sub-screen 10D.

The user can input a request for editing the sub-screens while still viewing the digital broadcast programs output to the corresponding main screen and sub-screens. At this time, the digital broadcast reception device provides a sub-screen editing menu to enable the user to edit the sub-screens. The sub-screen editing menu contains an item for moving each sub-screen up, down, left or right, an item for adjusting the size of each sub-screen, and an item for exchanging the pictures displayed on the main screen and any sub-screen.

The user can adjust the size of each sub-screen, relocate each sub-screen or exchange the pictures displayed on the main screen and any sub-screen.

As explained above, the digital broadcast reception device according to the present invention enables the user to view digital broadcast programs of preferred channels while viewing a specific digital broadcast program. The digital broadcast reception device sequentially outputs the digital broadcast programs of the preferred channels and automatically changes the preferred channels, which eliminates the need to directly press keys to search channels and enhances the user's convenience.

Although preferred embodiments of the present invention have been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. A method for outputting digital broadcast data in a digital broadcast reception device, which comprises the steps of:
setting at least two preferred channels in each of at least one broadcast reception mode;
detecting when a request for outputting broadcast programs of the preferred channels is input by a user during the output of a digital broadcast program currently received in a specific broadcast reception mode, and outputting the current digital broadcast program to a main screen;
generating sub-screens in a number corresponding to the number of the broadcast reception mode or modes in which the preferred channels have been set;
receiving digital broadcast programs of the preferred channels set in each broadcast reception mode; and
outputting the received digital broadcast programs to the corresponding sub-screens.

2. The method according to claim 1, wherein said broadcast reception mode includes a satellite digital broadcast reception mode, a terrestrial digital broadcast reception mode and a digital TV broadcast reception mode.

3. The method according to claim 1, wherein setting at least two preferred channels includes:
searching for broadcast reception modes available in the present area when the user inputs a request for setting preferred channels;
displaying at least one detected broadcast reception mode; and
setting at least two preferred channels in each of at least one displayed broadcast reception mode.

4. The method according to claim 3, further comprising setting time intervals at which the preferred channels in each broadcast reception mode should be changed.

5. The method according to claim 1, wherein said digital broadcast programs of the preferred channels are received in real time in the set order of the preferred channels.

6. The method according to claim 1, wherein receiving digital broadcast programs of the preferred channels includes:
checking whether information on the preferred channels is identical to channel information included in digital broadcast program guide data previously stored in a memory; and
receiving digital broadcast programs of the preferred channels whose information is identical to the channel information included in the digital broadcast program guide data in the set order of the preferred channels.

7. The method according to claim 6, further comprising:
confirming whether the previously stored digital broadcast program guide data has been updated; and
updating the digital broadcast program guide data if it has not been updated.

8. The method according to claim 1, further comprising indicating any preferred channel of which digital broadcast program is not received in a predetermined area of the corresponding sub-screen.

9. The method according to claim 1, further comprising indicating a corresponding broadcast reception mode in a predetermined area of each sub-screen.

10. The method according to claim 1, wherein said digital broadcast programs of the preferred channels in each broadcast reception mode are sequentially output at the preset time intervals.

11. The method according to claim 10, wherein outputting the received digital broadcast programs to the corresponding sub-screens includes:
discontinuing changing the preferred channels when the user selects any preferred channel during the sequential output of the digital broadcast programs of the preferred channels; and
continuing outputting only a digital broadcast program of the selected channel.

12. A method for outputting digital broadcast data in a digital broadcast reception device, which comprises the steps of:
setting at least two preferred channels for at least one broadcast reception modes;
storing digital broadcast programs received on the preferred channels in a memory;
detecting when a request for outputting the broadcast programs of the preferred channels is input by a user during the output of a digital broadcast program currently received in a specific broadcast reception mode, and outputting the current digital broadcast program to a main screen;
generating sub-screens in a number corresponding to the number of the broadcast reception mode or modes in which the preferred channels have been set; and
outputting the stored digital broadcast programs to the corresponding sub-screens in the set order of the preferred channels.

13. The method according to claim 12, wherein said broadcast reception mode includes a satellite digital broadcast reception mode, a terrestrial digital broadcast reception mode and a digital TV broadcast reception mode.

14. The method according to claim 12, wherein setting at least two preferred channels includes:
searching for broadcast reception modes available in the present area when the user inputs a request for setting preferred channels;
displaying at least one detected broadcast reception mode; and
setting at least two preferred channels in each of at least one displayed broadcast reception mode.

15. The method according to claim 14, further comprising setting time intervals at which the preferred channels in each broadcast reception mode should be changed.

16. The method according to claim 12, wherein said digital broadcast programs of the preferred channels are received and stored in the memory at preset time intervals.

17. The method according to claim 12, wherein storing digital broadcast programs of the preferred channels includes:
checking whether information on the preferred channels is identical to channel information included in digital broadcast program guide data previously stored in a memory; and
receiving digital broadcast programs of the preferred channels whose information is identical to the channel information included in the digital broadcast program guide data in the set order of the preferred channels.

18. The method according to claim 12, wherein outputting the stored digital broadcast programs to the sub-screens includes indicating any preferred channel whose information is not identical to the channel information included in the digital broadcast program guide data in a predetermined area of the corresponding sub-screen.

19. The method according to claim 17, further comprising:
confirming whether the previously stored digital broadcast program guide data has been updated; and
updating the digital broadcast program guide data if it has not been updated.

20. The method according to claim 12, wherein outputting the stored digital broadcast programs to the sub-screens includes indicating a corresponding broadcast reception mode in a predetermined area of each sub-screen.

21. The method according to claim 12, wherein said digital broadcast programs of the preferred channels in each broadcast reception mode are sequentially output at the preset time intervals.

22. The method according to claim 21, wherein outputting the stored digital broadcast programs to the sub-screens includes:
stopping changing the preferred channels when the user selects any preferred channel during the sequential output of the digital broadcast programs of the preferred channels; and
keeping on outputting a digital broadcast program of the selected channel only.
